# EUROPÄISCHE PATENTANMELDUNG

(11) **EP 4 656 560 A1**
(43) Veröffentlichungstag der Anmeldung: **03.12.2025**
(21) Anmeldenummer: 25178912.9
(22) Anmeldetag: 27.05.2025
(51) Int. Cl.: B65G 21/20, B65G 47/51, B65G 51/03

(54) **BEHÄLTERTRANSPORTEINRICHTUNG, BLASANLAGE SOWIE VERFAHREN ZUM BETRIEB**

(30) Priorität: 28.05.2024 DE 102024114970
(71) Anmelder: KHS GmbH, 44143 Dortmund (DE)
(72) Erfinder: Lewin, Frank, 44143 Dortmund (DE); Baumgarte, Rolf, 44143 Dortmund (DE); Frahm, Fynn Thießen, 44143 Dortmund (DE); Heller, Alexander, 44143 Dortmund (DE); Kiefer, Margit, 44143 Dortmund (DE); Klöpper, Gerhard, 44143 Dortmund (DE); Wagner, Natalja, 44143 Dortmund (DE); Striebel, Carlo, 44143 Dortmund (DE)
(74) Vertreter: Andrejewski - Honke Patent- und Rechtsanwälte Partnerschaft mbB

(57) **Zusammenfassung**

Die Erfindung betrifft eine Behältertransporteinrichtung (6) zum Transport von Getränkebehältern, insbesondere von Kunststoffvorformlingen (1), mit einer entlang eines Transportpfades (T) angeordneten Transportgasse (7), in welcher die Getränkebehälter lückenlos hintereinander transportierbar sind. Erfindungsgemäß ist eine entlang des Transportpfades (T) verlaufende Länge der Transportgasse (7) in zumindest einem Transportgassenabschnitt einstellbar ausgebildet.

## Beschreibung

Die vorliegende Erfindung betrifft eine Behältertransporteinrichtung zum Transport von Behälter und/oder Behälterelemente, insbesondere von Getränkebehältern, mit einer entlang eines Transportpfades angeordneten Transportgasse, in welcher die Getränkebehälter lückenlos hintereinander transportierbar sind.

Unter einem lückenlosen Transport wird in diesem Zusammenhang eine Ausgestaltung verstanden, bei der die Getränkebehälter unmittelbar aneinander angrenzen können. Selbstverständlich ist es in diesem Zusammenhang aber auch möglich, dass sich zwischen einzelnen Getränkebehältern oder aber auch zwischen einzelnen Reihen von Getränkebehältern Lücken bilden, wobei es sich aber um vordefinierte Lücken handelt, welche von der Transportgasse vorgegeben werden.

Derartige Behältertransporteinrichtungen sind grundsätzlich aus dem Stand der Technik bekannt, wobei sich insbesondere auf Behältertransporteinrichtungen aus dem Bereich der Lebensmittelindustrie, insbesondere der Getränkeindustrie, bezogen wird. Entsprechend sind die Getränkebehälter bestimmungsgemäß dazu vorgesehen, ein flüssiges Lebensmittel z. B. ein Getränk aufzunehmen. Entsprechend kann es sich bei den Getränkebehältern um Getränkeflaschen oder Getränkedosen handeln. Die Getränkeflaschen können hierbei wiederum entweder aus Glas oder aber auch aus Kunststoff gebildet sein. Insbesondere handelt es sich im Falle von Kunststoff um Polyethylenterephthalat (PET).

Insbesondere sieht die Erfindung vor, dass es sich bei den Getränkebehältern um Kunststoffvorformlinge bzw. Preforms handelt, welche im Rahmen einer Blasumformung oder einer Streckblasumformung zu Getränkeflaschen ausgebildet werden. Wenngleich es sich bei derartigen Kunststoffvorformlingen um Getränkebehälter handelt, welche zu einem großen Teil plastisch verformt werden sollen, so weisen diese bereits ein fertig ausgebildete Behältermündung mit einem Außengewinde zur Aufnahme einer Verschlusskappe auf. Üblicherweise ist unterhalb des Außengewindes ein radial vorstehender Neckring angeordnet. Dieser Neckring kann innerhalb der Behältertransporteinrichtungen dazu verwendet werden, um den Transport der Getränkebehälter innerhalb der Transportgasse zu führen. Üblicherweise weist hierzu die Transportgasse seitliche Führungsschienen bzw. Neckringschienen auf, wobei der Kunststoffvorformling mit dem Neckring auf diesen Neckringschienen aufliegt und somit entlang des Transportpfades gleitend geführt wird.

Die Kunststoffvorformlinge sind aus einem thermoplastischen Kunststoff, insbesondere Polyethylenterephthalat, gebildet und werden im Zuge des Umformprozesses zunächst üblicherweise über einen Steigförderer aus einem Sammelbehälter entnommen und anschließend in einer Sortiereinrichtung vereinzelt und ausgerichtet. Sodann werden die Behälter der eigentlichen Blasvorrichtung zugeführt, wobei zunächst eine Aufheizung der Kunststoffvorformlinge in einer Heizvorrichtung erfolgt. Diese Aufheizung führt dazu, dass sich das Material der Kunststoffvorformlinge zumindest unterhalb des Neckrings aufheizt und dadurch aufweicht. Hierdurch ist es möglich, anschließend die Kunststoffvorformlinge in der Blasvorrichtung auszuformen.

Darüber hinaus kann die Behältertransporteinrichtung aber auch dazu eingerichtet sein Behälterelemente zu transportieren. Unter Behälterelementen werden in diesem Zusammenhang Elemente verstanden, welche unmittelbar mit den Behältern zusammenwirken können. Hierbei handelt es sich insbesondere um Deckel z.B. Verschlusskappen, welche auf dem Außengewinde eines Behälters aufgeschraubt werden können.

Insbesondere zum Einbringen der Getränkebehälter in die Blasvorrichtung kann dann eine entsprechende Behältertransporteinrichtung vorgesehen sein, welche die Zuführung der Kunststoffvorformlinge in die Blasvorrichtung steuert. Die Kunststoffvorformlinge gelangen hierbei ausgehend von der Sortiereinrichtung in die Behältertransporteinrichtung und werden dort entweder allein aufgrund ihrer Schwerkraft oder mittels Beaufschlagung mit Druckluft in Richtung der Blasvorrichtung gefördert. Der Transportpfad innerhalb der Behältertransporteinrichtung ist hierbei üblicherweise linear bzw. gerade ausgebildet, wobei aber im Falle einer Förderung mit Schwerkraft eine geringfügige Schrägstellung der Transportgasse vorgesehen ist.

Die Behältertransporteinrichtung schließt dann üblicherweise an einen Einteilungsstern, z.B. einen Sägezahnstern, an, welcher die Getränkebehälter ausgehend von einer lückenlosen Förderung aufnimmt und innerhalb einer festgelegten Teilung zueinander beabstandet. Die Teilung orientiert sich hierbei an der Teilung der nachfolgenden Anlagenkomponenten.

Eine entsprechende Behältertransporteinrichtung ist beispielsweise aus der DE 10 2020 122 470 A1 bekannt, wobei eine als Zuführtransporteinrichtung bezeichnete Behältertransporteinrichtung die Zuführung der Vorformlinge in eine Heizvorrichtung ermöglicht. Hierbei ist es auch bekannt, dass die Zuführung der Getränkebehälter dadurch gestoppt werden kann, in dem ein Haltelement in die Transportgasse eingeführt wird und hierdurch die Bewegung der Getränkebehälter blockiert. Dies kann beispielsweise erforderlich sein, wenn eine schnelle Abschaltung der Maschine gewünscht wird. Bei einer Inbetriebnahme werden zunächst die einzelnen Anlagenkomponenten gestartet und sodann durch Lösen des Haltelementes die Zuführung bzw. die Bewegung der Getränkebehälter ermöglicht.

Eine derartige Ausgestaltung ist in der Praxis üblich, wobei das Haltelement in eine Querrichtung zur Transportrichtung verfahren wird. Die Transportrichtung ist hierbei die Richtung, entlang der die Getränkebehälter innerhalb des Transportpfades bewegt werden. Insbesondere ist die Querrichtung im senkrecht zur Transportrichtung angeordnet, wobei im Rahmen der Erfindung aber auch Anordnungen der Haltelemente möglich sind, bei denen eine leichte Schrägstellung zur Querrichtung vorgesehen ist. Hierbei wird sich mit einer schrägen Anordnung auf Ausgestaltung bezogen, bei der das Haltelement in einer Haltestellung in einem Winkel zwischen 70° und 110°, insbesondere zwischen 75° und 105° zur Transportrichtung angeordnet ist.

Eine sprechende Ausgestaltung hat sich in der Praxis grundsätzlich bewährt, da in einem sehr kurzen Zeitabschnitt von wenigen Millisekunden eine Unterbrechung der Behälterzufuhr ermöglicht werden kann.

Allerdings zeigt sich gerade bei einer hohen Durchsatzzahl von Getränkebehältern, dass für das Haltelement nur ein verhältnismäßig kurzer Zeitabschnitt zur Verfügung steht, um zwischen zwei Getränkebehälter einer Behälterkette eingreifen zu können. Dies führt unweigerlich dazu, dass einzelne Getränkebehälter oder aber auch das Haltelement beschädigt werden können.

Vor diesem Hintergrund liegt der Erfindung die Aufgabe zugrunde, eine Behältertransporteinrichtung anzugeben, welche die Zuführung von Getränkebehältern in nachfolgender Anlagenkomponenten in produktschonender Art und Weise ermöglicht und soweit zugleich die Funktionssicherheit verbessert werden soll.

Gegenstand und Lösung dieser Aufgabe ist eine Behältertransporteinrichtung gemäß Patentanspruch 1. Demnach ist erfindungsgemäß vorgesehen, dass eine entlang des Transportpfades verlaufende Länge der Transportgasse in zumindest einem Transportgassenabschnitt einstellbar ausgebildet ist. Entsprechend ist es möglich, die Länge der Transportgasse zu variieren, sodass in verschiedenen Betriebszuständen entweder eine größere oder aber auch eine kleinere Länge vorgesehen sein kann. Durch Einstellen der Länge ist es möglich, den Transport von Getränkebehältern innerhalb der Transportgasse zu puffern und insbesondere den Behälterdruck, welchen die Getränkebehälter unmittelbar aufeinander ausüben, zu reduzieren.

Sofern beispielsweise ein Halteelement vorgesehen ist, kann das Einbringen dieses Haltelementes dazu führen, dass das Haltelement auf einen Getränkebehälter stößt, welcher aufgrund des Behälterdruckes stromaufwärts nicht schnell genug zurückweichen kann. Durch Verlängerung des Transportpfades wird der Behälterdruck nunmehr reduziert und Beschädigungen an den Getränkebehältern können hierdurch verringert werden. Zugleich ist es selbstverständlich auch denkbar, dass allein durch die Veränderung der Länge der Transportgasse der Behälterdruck soweit abnimmt, dass ein zusätzliches Haltelement zum Anhalten nicht zwingend erforderlich ist. Eine solche Ausgestaltung ist insbesondere dann denkbar, sofern der Transport der Getränkebehälter innerhalb der Transportgasse über eine Druckluftversorgung erfolgt. Durch Abschalten der Druckluftversorgung bzw. durch Entkoppeln der Druckluftversorgung von der Transportgasse und durch zeitgleiche Verlängerung des Transportpfades kann beispielsweise ein vollständiges Abschalten des Behältertransports bewirkt werden.

Zugleich weist die erfindungsgemäße Ausgestaltung aber auch den Vorteil auf, dass bei Aufnahme des Betriebs die innerhalb des Transportabschnittes angeordneten Getränkebehälter durch eine Verkürzung der Länge der Transportgasse beschleunigt werden können und somit bereits eine gewisse Geschwindigkeit aufweisen, wenn diese nachfolgenden Anlagenkomponenten z.B. dem Einteilungsstern zugeführt werden. Diese höhere Transportgeschwindigkeit führt dazu, dass die Relativgeschwindigkeit zwischen dem Einteilungsstern und den ersten Getränkebehältern abnimmt, sodass auch Beschädigungen an den Getränkebehältern an dieser Stelle verringert werden können. Darüber hinaus ist es auch möglich, dass durch eine Verkürzung der Transportgasse Lücken zwischen den Getränkebehältern ausgeglichen werden. Auch diese Lücken können bei der Zuführung der Getränkebehälter in den Einteilungsstern problematisch sein.

Wenngleich sich die vorstehenden Erläuterungen insbesondere auf Kunststoffvorformlinge beziehen, welche innerhalb einer anschließenden Blasvorrichtungen plastisch ausgeformt werden sollen, so eignet sich die vorliegende Erfindung grundsätzlich für alle Arten von Behältertransporteinrichtungen, welche in irgendeiner Form einen Transport von Getränkebehältern entlang eines vordefinierten Transportpfades bewirken.

Gemäß einer bevorzugten Weiterbildung der Erfindung ist die Transportgasse in dem zumindest einen Transportgassenabschnitt als separates Transportgassenelement ausgebildet. Unter einem separaten Transportgassenelement ist hierbei zu verstehen, dass die Transportgasse in diesem Transportgassenabschnitt separat von den angrenzenden Transportgassenabschnitten der Transportgasse ausgebildet ist. Bevorzugt ist hierbei vorgesehen, dass die an das Transportgassenelement angrenzenden Transportabschnitte der Transportgasse feststehend und somit nicht in ihrer Länge variierbar ausgebildet sind. Ausgehend von einer solchen Ausgestaltung kann dann bevorzugt vorgesehen sein, dass das Transportgassenelement entweder selbst in seiner Länge einstellbar ausgebildet ist und/oder, dass das Transportgassenelement derart gegenüber den angrenzenden Transportabschnitten gelagert ist, dass durch Verstellen des Transportgassenelements gegenüber den angrenzenden Transportgassenabschnitten eine Veränderung der Länge der Transportgasse bewirkbar ist.

Gemäß einer bevorzugten Weiterbildung der Erfindung ist das Transportgassenelement zumindest in einem angrenzenden feststehenden Transportabschnitt der Transportgasse längsverschieblich gelagert. Dies kann beispielsweise dadurch bewirkt werden, indem das Transportgassenelement in einem Lagerabschnitt zwischen zwei Endstellungen gleitend innerhalb eines angrenzenden Transportgassenabschnittes angeordnet ist. Zur Verlängerung der Länge der Transportgasse kann dann das Transportgassenelement zumindest ein Stück aus dem angrenzenden Transportgassenabschnitt der Transportgasse herausgefahren werden, wodurch sich die Länge der Transportgasse erhöht.

Gemäß einer besonders bevorzugten Weiterbildung der Erfindung ist ferner vorgesehen, dass das Transportgassenelement an beiden angrenzenden feststehenden Transportabschnitten der Transportgasse längsverschieblich gelagert ist. Sofern die angrenzenden Transportgassenabschnitte entlang eines geraden Transportpfades hintereinander angeordnet sind, ist eine Verlängerung der Transportgasse jedoch nur dann möglich, wenn das Transportgassenelement in seiner Form veränderbar ausgebildet ist, um durch den festgelegten Abstand der beiden angrenzenden feststehenden Transportgassenabschnitte zueinander eine Verlängerung des Transportpfades zu bewirken.

Entsprechend bildet das Transportgassenelement bevorzugt einen formveränderbaren Transportgassenabschnitt. Mit einer Formveränderung ist in diesem Zusammenhang gemeint, dass das Transportgassenelement einen veränderbaren Transportpfad bildet. Beispielsweise kann hierzu das Transportgassenelement ausgehend von einem geraden Transportpfad so verformt werden, dass der Transportpfad anschließend bogenförmig ausgebildet ist und zugleich das Transportgassenelement aus den angrenzenden Transportgassenabschnitten herausgefahren wird. Selbstverständlich ist es auch denkbar, dass ausschließlich eine Formveränderung bewirkt wird, wobei dann das Transportgassenelement selbst verlängerbar ausgebildet sein muss.

Um eine entsprechende Veränderung der Form bewirken zu können, ist das Transportgassenelement zumindest teilweise aus einem flexiblen, insbesondere elastischen, Material gebildet, wobei zumindest die Behälterführung, insbesondere die Neckringführung, an einem elastischen Abschnitt des Transportgassenelementes gebildet ist. Um dennoch eine ausreichende Stabilität gewährleisten zu können, können oberhalb und/oder unterhalb der Behälterführung Querstreben bzw. Bügel vorgesehen sein, welche zumindest den Abstand der Führungsschienen der Behälterführung zueinander festlegen. Gerade bei einer Neckringführung ist der Abstand zwischen den Führungsschienen entscheidend, da die Getränkebehälter einerseits in der Behälterführung gehalten werden und andererseits zwischen den Führungsschienen hindurchgleiten müssen.

Gemäß einer Weiterbildung der Erfindung ist das Transportgassenelement dazu ausgebildet, zumindest in einer Pufferstellung einen U-förmigen Abschnitt des Transportpfades der Transportgasse zu bilden. Die Pufferstellung beschreibt in diesem Zusammenhang die Stellung des Transportgassenelementes, in dem die Transportgasse gegenüber einer Betriebsstellung eine vergrößerte Länge aufweist. Entsprechend kann das Transportgassenelement zwischen einer Betriebsstellung und einer Pufferstellung verstellt werden. Zumindest in der Pufferstellung weist dann das Transportgassenelement bevorzugt eine U-förmige Ausgestaltung auf bzw. verläuft der Transportpfad zumindest entlang des Transportgassenelements U-förmig. In der Betriebsstellung kann dann das Transportgassenelement einen geraden Transportpfad aufweisen. Entsprechend wird zwischen der Betriebsstellung und der Pufferstellung eine Veränderung der Form des Transportelementes und damit auch des Transportpfades bewirkt.

Selbstverständlich liegt es aber auch im Rahmen der Erfindung, wenn das Transportgassenelement sowohl in der Pufferstellung als auch in einer Betriebsstellung einen U-förmigen Abschnitt des Transportpfades der Transportgasse bildet. Entsprechend kann beispielsweise die U-Form zwischen der Betriebsstellung und der Pufferstellung unterschiedlich stark ausgeprägt sein bzw. kann die Krümmung des U-förmigen Abschnittes zwischen der Betriebsstellung und der Pufferstellung unterschiedlich groß sein.

Allerdings sind im Rahmen der Erfindung auch Ausgestaltungen möglich, bei der die U-Form bzw. die Krümmung des U-förmigen Abschnittes zwischen der Betriebsstellung und der Pufferstellung nicht veränderbar ist. In diesem Fall kann dann das Transportgassenelement beidseitig an gekrümmte Transportabschnitte der Transportgasse anschließen. Insbesondere liegt hier eine längsverschieblich ausgebildete Anbindung vor. Es bildet sich somit eine Transportgasse, welche eine veränderbare Länge nach Art einer Posaune aufweist. Entsprechend werden die Getränkebehälter zwingendermaßen ausgehend von einer geraden Führung über eine gekrümmte Anbindung in das Transportgassenelement eingebracht, wobei durch seitliches Herausfahren des Transportgassenelementes eine Verlängerung der Transportgasse bewirkt wird. Über einen weiteren gekrümmten Abschnitt erfolgt die Anbindung an einen weiteren linearen Abschnitt der Transportgasse. Eine solche Ausgestaltung weist den Vorteil auf, dass das Transportgassenelement nicht formveränderbar ausgebildet sein muss. Insbesondere der U-förmige Abschnitt muss hierbei nicht zwingend veränderbar ausgebildet sein, sodass eine Verlängerung ausschließlich über eine Verschiebung zwischen dem Transportgassenelement und den angrenzenden Transportgassenabschnitten der Transportgasse bewirkt wird.

Eine bevorzugte Weiterbildung der Erfindung sieht vor, dass der Transportgasse zur Verstellung der Länge eine Antriebseinrichtung zugeordnet ist. Besonders bevorzugt ist die Antriebseinrichtung dem separaten Transportgassenelement zugeordnet bzw. mit dieser zur Verstellung der Länge wirkverbunden. Bei der Antriebseinrichtung handelt es sich bevorzugt um einen Elektroantrieb, welcher in Form eines Linearantriebes oder aber auch über einen Koppelantrieb mit Gewindestange auf die Transportgasse bzw. auf das Transportgassenelement einwirken kann. Üblicherweise ist die Antriebseinrichtung dazu ausgebildet und eingerichtet, eine Verstellung der Transportgasse bzw. des Transportgassenelementes quer zur Transportrichtung, insbesondere in eine Querrichtung, zu bewirken. Anstelle eines Elektroantriebes kommen selbstverständlich auch pneumatische oder hydraulische Antriebseinheiten in Betracht. Die Antriebseinrichtung ist ferner bevorzugt dazu eingerichtet, die Transportgasse bzw. das Transportgassenelement zwischen der Pufferstellung und der Betriebsstellung zu bewegen. Die Antriebseinrichtung kann ferner mit einer Steuervorrichtung signalwirkend verbunden sein. Entsprechend kann über die Steuerungsvorrichtung ein Betrieb oder aber auch ein Halt der Behältertransporteinrichtung vorgegeben werden, wobei im Falle eines Haltes die Antriebseinrichtung eine Verstellung in die Pufferstellung und im Falle eines Betriebs in die Betriebsstellung bewirkt.

In diesem Zusammenhang kann ferner ein Halteelement in einem Endabschnitt der Transportgasse angeordnet sein. Dieses Halteelement ist bevorzugt quer zur Transportgasse verfahrbar ausgebildet und versperrt während eines Halts die Transportgasse, sodass die Zufuhr von Getränkebehältern in nachfolgenden Anlagenkomponenten unterbrochen wird. Sofern also beispielsweise durch die Steuerungsvorrichtung ein Haltesignal vorgegeben wird, kann zunächst durch Überführung der Transportgasse in die Pufferstellung der Behälterdruck innerhalb der Transportgasse reduziert werden, wobei sodann das Halteelement ausgefahren wird und die Transportgasse versperrt. Im Falle einer Aufnahme des Betriebs wird dann üblicherweise zunächst die Transportgasse in die Betriebsstellung überführt und die darin befindlichen Getränkebehälter beschleunigt sowie etwaige Lücken zwischen den Getränkebehältern geschlossen. Sodann erfolgen das Zurückfahren des Halteelements und die Freigabe der Transportgasse. Die Getränkebehälter können nun an nachfolgende Anlagenkomponenten übergeben werden. Entsprechend ist die Steuerungsvorrichtung signalwirkend mit der Antriebsvorrichtung und dem zumindest einen Halteelement verbunden. Die signalwirkende Verbindung kann sowohl kabelgebunden als auch kabellos ausgebildet sein.

Eine bevorzugte Weiterbildung der Erfindung sieht vor, dass der Transportgasse eine Sortiereinrichtung vorgeschaltet ist. Mit einer vorgeschalteten Anordnung wird sich auf die bestimmungsgemäße Transportrichtung des Transportpfades bezogen. Entsprechend gelangen die Getränkebehälter ausgehend von der Sortiereinrichtung in die Behältertransportvorrichtung. Bei der Sortiereinrichtung handelt es sich insbesondere um einen Rollensortierer. Ein Rollensortierer besteht üblicherweise aus zwei nebeneinander angeordneten Förderrollen, deren Drehachsen im Wesentlichen parallel zueinander angeordnet sind und wobei die Förderrollen in einem Abstand zueinander angeordnet sind, sodass die Getränkebehälter zwischen den Fördererrollen transportiert werden können. Der Abstand der Fördererrollen zueinander ist hierbei so ausgelegt, dass die Getränkebehälter mit einem Neckring auf den Fördererrollen aufliegen. Die Fördererrollen selbst werden gegenläufig rotierbar betrieben und weisen im Bereich der Getränkebehälter eine nach oben ausgerichtete Förderrichtung auf. Entsprechend werden die Getränkebehälter durch die Rotation der Fördererrollen kontinuierlich nach oben geworfen und hierdurch hintereinander zwischen den Fördererrollen einsortiert. Darüber hinaus weisen die Fördererrollen eine gewisse Schrägstellung auf, sodass die Getränkebehälter aufgrund der Schwerkraft entlang der Fördererrollen transportiert werden können. Die Behältertransporteinrichtung kann dann unmittelbar oder aber auch über ein Übergangselement an die Sotiereinrichtung anschließen. Dieses Übergangselement ist insbesondere dann vorgesehen, wenn die Behältertransporteinrichtung und die Sortiereinrichtung eine unterschiedliche Schrägstellung gegenüber einer horizontalen Ebene aufweisen.

Der Sortiereinrichtung kann darüber hinaus ein Steigförderer vorgeschaltet sein. Dieser Steigförderer entnimmt die Getränkebehälter aus einem Sammelbehälter und fördert sie im Wesentlichen vertikal nach oben. Von dort aus fallen sie dann von oben in die Sortiereinrichtung bzw. in den Rollensortierer, welcher dann die schubweise geförderten Getränkebehälter vereinzelt und hintereinander anordnet.

Gemäß einer besonders bevorzugten Weiterbildung der Erfindung ist die Behältertransporteinrichtung dazu eingerichtet, Getränkebehälter in Form von Kunststoffvorformlingen zu fördern. Dies kann entsprechend auch für eine vorgeschaltete Sortiereinrichtung und einen vorgeschalteten Steigförderer gelten.

Ausgehend von dieser Betrachtung ist dann auch eine Blasanlage gemäß Patentanspruch 11 Gegenstand der Erfindung. Insbesondere handelt es sich um eine Streckblasanlage. Derartige Anlagen weisen eine Blasverrichtung zum Ausformen von Getränkebehältern und eine der Blasvorrichtung vorgeschaltete erfindungsgemäße Behältertransporteinrichtung auf. Die Blasvorrichtung weist insbesondere ein rotierbar angetriebenes Blasrad auf, wobei die Getränkebehälter in Form von Kunststoffvorformlingen an einer Stellung des Blasrades in die Blasverrichtung eingeführt und an einer weiteren Position als fertig ausgeformte Getränkeflaschen entnommen werden. Das Ausformen der Getränkebehälter erfolgt im Zuge der Rotation des Blasrades. Die Getränkebehälter werden hierbei zunächst in Form von Kunststoffvorformlingen in eine Blasform eingesetzt, welche eine Blaskavität aufweist welche der Form der zu fertigenden Getränkeflasche entspricht. Durch Einbringen eines Blasfluids wird dann ein Körperabschnitt der Getränkebehälter aufgeweitet und an die Blaskavität herangerückt. Zusätzlich kann auch eine sogenannte Reckstange entlang der Behälterachse verfahren werden und den Getränkebehälter axial längen. Dieses Verfahren wird dann auch als Streckblasformen bezeichnet. Bei dem Blasfluid handelt es sich beispielsweise um ein gasförmiges Blasfluid, insbesondere um Druckluft. Alternativ ist es aber auch bekannt, ein flüssiges Blasfluid zu verwenden. Hierbei handelt es sich dann üblicherweise um ein Fluid, welches ohnehin als flüssiges Füllmedium in der zu fertigenden Getränkeflasche eingefüllt werden soll. Insbesondere handelt es sich dann bei dem Blasfluid um ein Getränk.

Zwischen der Blasvorrichtung und der Behältertransporteinrichtung kann ferner die Blasanlage eine Heizvorrichtung aufweisen, welche die Getränkebehälter in Form von Kunststoffvorformlingen während eines Transports erwärmt und das Material aufweicht. Die Heizvorrichtung kann hierbei einen Einteilungsstern, insbesondere einen Sägezahnstern, aufweisen, welcher dazu eingerichtet ist, die im Wesentlichen lückenlos hintereinander geförderten Getränkebehälter aus der Behältertransporteinrichtung zu entnehmen und auf Teilung zu bringen, wobei die Teilung der Teilung der Heizvorrichtung bzw. der Blasvorrichtung entspricht. Entsprechend schließt die Heizvorrichtung über den Einteilungsstern an die Behältertransporteinrichtung an.

Gegenstand der Erfindung ist ferner ein Verfahren zum Betrieb einer erfindungsgemäßen Behältertransporteinrichtung und/oder einer erfindungsgemäßen Blasanlage, wobei zur Einleitung eines Betriebs die Transportgasse ausgehend von einer Pufferstellung verkürzt und die Behälter entlang der Transportgasse gefördert werden und/oder wobei zur Einleitung eines Halts die Transportgasse ausgehend von einer Betriebsstellung verlängert und der Transport der Getränkebehälter unterbrochen wird. Darüber hinaus kann das Verfahren aber auch ergänzend oder alternativ dazu genutzt werden, während des Betriebs Lücken zwischen den Behälter zu schließen und/oder diese zu beabstanden.

Darüber hinaus kann erfindungsgemäß vorgesehen sein, dass zur Unterbrechung des Transports der Getränkebehälter ein Halteelement in eine Haltestellung innerhalb des Transportpfades überführt wird. Das Halteelement wird hierbei quer zur Transportrichtung verfahren, wobei üblicherweise zunächst die Transportgasse in die Pufferstellung und erst dann das Halteelement in die Haltestellung überführt werden. Analog dazu kann zur Einleitung eines Betriebs zunächst die Transportgasse in die Betriebsstellung überführt und sodann das Halteelement aus der Haltestellung zurückgeführt und die Transportgasse freigegeben werden.

Eine Weiterbildung des Verfahrens sieht ferner vor, dass die Transportgasse zwischen dem Betrieb und dem Halt unterschiedlich ausgebildete Transportpfade aufweist.

Darüber hinaus handelt es sich bei den Getränkebehältern vorzugsweise um Kunststoffvorformlinge, insbesondere Kunststoffvorformlinge aus Polyethylenterephthalat.

Eine bevorzugte Weiterbildung der Erfindung sieht ferner vor, dass die Getränkebehälter anschließend plastisch ausgeformt werden. Dies kann beispielsweise durch das zuvor beschriebene Blasformen oder Streckblasformen erfolgen.

Im Folgenden wird die Erfindung anhand eines Ausführungsbeispiels näher erläutert. Es zeigen:
- Fig. 1: eine schematische Darstellung einer Behältertransporteinrichtung aus dem Stand der Technik
- Fig. 2: eine erfindungsgemäße Blasanlage, welche an einer entsprechenden Behältertransporteinrichtung gemäß der Fig. 1 oder an eine erfindungsgemäße Behältertransporteinrichtung anschließen kann
- Fig. 3A, 3B: eine erfindungsgemäße Behältertransporteinrichtung in einer Betriebs- und einer Pufferstellung
- Fig. 4: eine Draufsicht auf die Behältertransporteinrichtung gemäß den Fig. 3A, 3B in einem Übergangsabschnitt
- Fig. 5: ein Querschnitt durch eine Behältertransporteinrichtung gemäß der Fig. 4
- Fig. 6A, 6B: eine erfindungsgemäße Behältertransporteinrichtung gemäß einer weiteren Ausgestaltungsform.

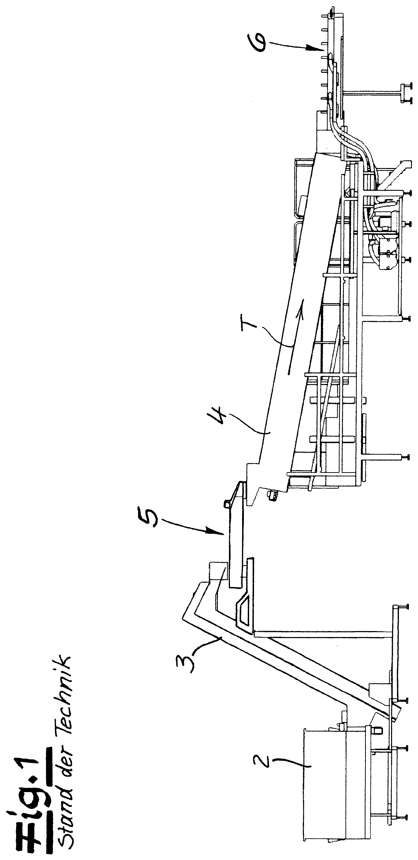

Die Fig. 1 zeigt eine Behältertransporteinrichtung zum Transport von Getränkebehältern in Form von Kunststoffvorformlingen 1. Diese sind aus einem thermoplastischen Kunststoff insbesondere aus Polyethylenterephthalat (PET) gebildet und liegen zunächst innerhalb eines Sammelbehälters 2 vor. Von dort aus gelangen sie über einen Steigförderer 3 in eine Sotiereinrichtung 4, welche gemäß der Fig. 1 als Rollensortierers ausgebildet ist, und die Kunststoffvorformlinge 1 entlang eines Transportpfades T hintereinander ausrichtet und anordnet, sodass diese in einer vorgegebenen Anordnung der nachgeschalteten Streckblasmaschine zugeführt werden können. Zwischen dem Steigförderer 3 und der Sortiereinrichtung 4 ist ferner ein Transportband 5 angeordnet, welches die schubweise geförderten Kunststoffvorformlingen 1 ein Stück weit zueinander beabstandet.

Die Sortiereinrichtung 4 schließt dann in Transportrichtung entlang des Transportpfades T an eine Behältertransporteinrichtung 6 an, welche gemäß dem gezeigten Beispiel in der Fig. 1 als Druckluftförderer ausgebildet ist und die Kunststoffvorformlinge 1 durch Beaufschlagung mit Druckluft fördert. Die Behältertransporteinrichtung 6 ist daher im Wesentlichen parallel zu einer horizontalen Ebene angeordnet, während die Sortiereinrichtung 4 leicht schräg gestellt ist, um eine Förderung allein aufgrund der Gewichtskraft der Kunststoffvorformlinge 1 zu bewirken. Die Behältertransportvorrichtung 6 weist eine Transportgasse 7 auf, in welcher die Kunststoffvorformlinge 1 im Wesentlichen lückenlos hintereinander gefördert werden können. Entsprechend liegen die Kunststoffvorformlinge 1 unmittelbar aneinander an und bewirken hierdurch einen Behälterdruck zwischen den zu fördernden Kunststoffvorformlingen 1.

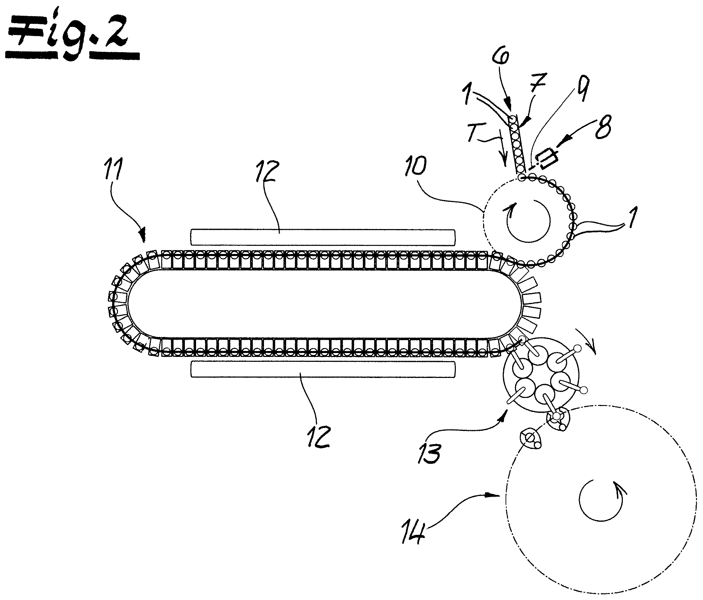

Gemäß der Fig. 2 ist endseitig eine Haltevorrichtung 8 mit einem quer zur Transportrichtung des Transportpfades T angeordneten Haltelement 9 vorgesehen, wobei durch Ausfahren des Haltelementes 9 in einen Haltezustand die Transportgasse 7 versperrt wird, sodass die im Wesentlichen lückenlos geförderte Kunststoffvorformlinge 1 nicht in einen anschließenden Einteilungsstern 10 gelangen können. Sofern das Haltelement 9 nicht ausgefahren ist, werden die Kunststoffvorformlinge 1 von dem Einteilungsstern 10 übernommen und dort auf Teilung gebracht. Der Einteilungsstern kann hierbei insbesondere als Sägezahnstern ausgebildet sein. Der Einteilungsstern 10 übergibt die Kunststoffvorformlinge 1 an eine Heizvorrichtung 11, in der die Kunststoffvorformlinge 1 weiter entlang eines Transportpfades T gefördert und zugleich durch Beaufschlagung mit Wärmestrahlung erwärmt werden. Hierzu sind entsprechende Heizelemente 12 vorgesehen. Ausgehend von der Heizvorrichtung 11 gelangen dann die Kunststoffvorformlinge 1 über einen Teilungsverzugsstern 13 in die Blasvorrichtung 14, in welcher die Kunststoffvorformlinge 1 zu Getränkeflaschen ausgeformt werden.

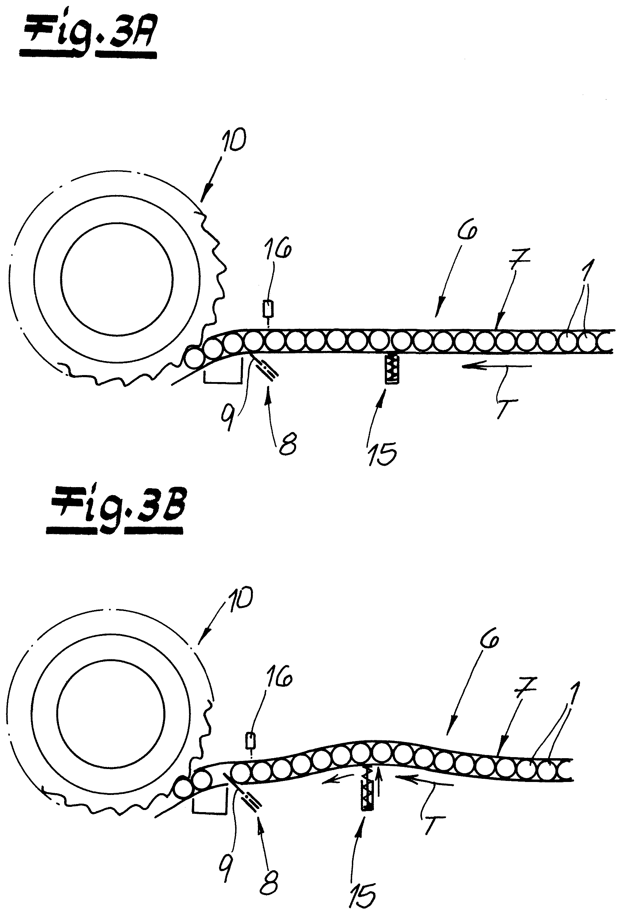

Die Fig. 3A, 3B zeigen eine erfindungsgemäße Behältertransporteinrichtung 6 in zwei verschiedenen Zuständen. Gemäß der Figur 3A ist die Transportgasse 7 gerade ausgebildet und weist eine entlang des Transportpfades T verlaufende Länge auf, in welcher die Kunststoffvorformlinge 1 lückenlos hintereinander gefördert werden. Das Halteelement 9 der Haltevorrichtung 8 ist eingefahren, sodass die Kunststoffvorformlinge 1 an den als Sägezahnstern ausgebildeten Einteilungsstern 10 übergeben werden können.

Um ausgehend von dem in der Fig. 3A gezeigten Betrieb in einen Halt überzugehen, wird im Stand der Technik üblicherweise ausschließlich das Halteelement 9 ausgefahren, wodurch dieses die Transportgasse 7 blockiert und die Kunststoffvorformlinge 1 nicht an den Einteilungsstern 10 überführt werden können. Hierbei ist es aber entscheidend, dass das Halteelement 9 in einen Bereich der Transportgasse 7 eingreift, in welchen die hintereinander geförderten Kunststoffvorformlinge 1 eine Lücke bilden bzw., in welchen die Kunststoffvorformlinge 1 aneinander anliegen. Sofern das Haltelement 9 auf die größte Erstreckung der Kunststoffvorformlinge 1 trifft, kann dies dazu führen, dass aufgrund des vorherrschenden Behälterdruckes, die Kunststoffvorformlinge 1 nicht schnell genug gegeneinander ausweichen können, sodass zumindest ein Kunststoffvorformling 1 beschädigt werden kann. Auch das Haltelement 9 kann hierbei beschädigt werden. Vor diesem Hintergrund zeigt die Fig. 3A bereits, dass das Haltelement 9 schräg angeordnet ist, wodurch der zuvor beschriebene Effekt zumindest verringert wird.

Anhand der Fig. 3B wird aber nunmehr ferner deutlich, dass die Transportgasse 7 in einem Transportgassenabschnitt formveränderbar ausgebildet ist, wodurch sich die Länge der Transportgasse 7 erhöht. In diesem Fall wird die Transportgasse 7 derart verformt, dass diese zumindest abschnittsweise einen U-förmigen Transportpfad T bildet. Dies wird bewirkt über eine Antriebseinrichtung 15, welche quer zur Transportrichtung des Transportpfades T wirkt.

Durch die Verlängerung der Transportgasse 7 verringert sich der Behälterdruck der hintereinander geförderten Kunststoffvorformlinge 1, sodass das Halteelement 9 anschließend zwischen zwei aneinander angrenzende Kunststoffvorformlinge 1 eingeführt werden kann.

Um dennoch entsprechende Lücken zwischen zwei hintereinander angeordneten Kunststoffvorformlingen 1 zu detektieren ist ferner eine Behälterdetektionseinrichtung 16 vorgesehen.

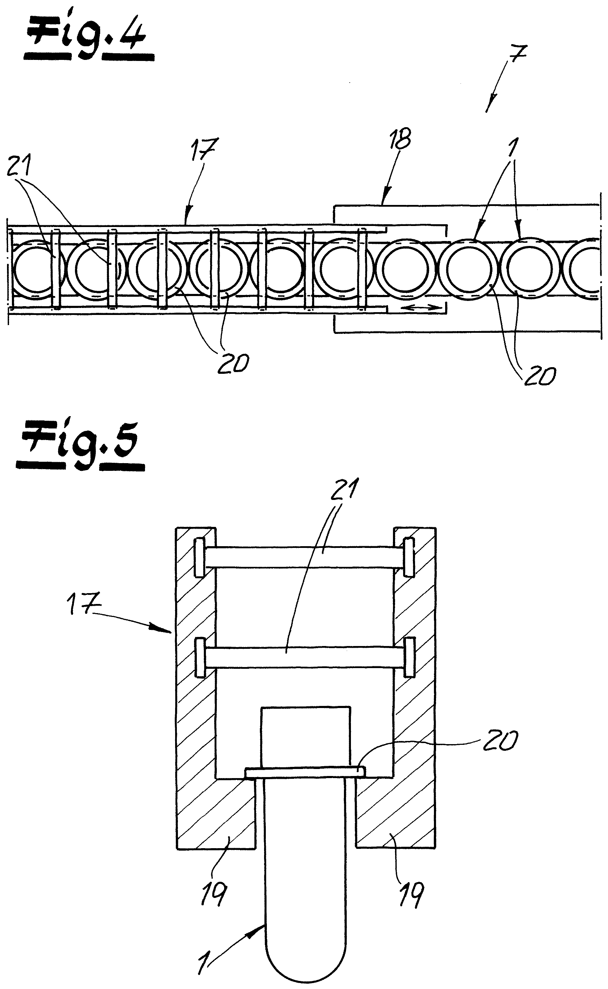

Die Fig. 4 zeigt die Transportgasse 7 in dem Transportgassenabschnitt, in welchem die Längenänderung der Transportgasse 7 erfolgen soll. Der Transportgassenabschnitt ist hierbei als separates Transportgassenelement 17 gebildet, welches längsverschieblich in dem angrenzenden feststehenden Transportgassenabschnitt 18 gelagert ist. Entsprechend wird durch Betätigung der Antriebseinrichtung 15 das Transportgassenelement 17 verformt und verfährt zugleich aus dem feststehenden Transportgassenabschnitt 18 heraus, wodurch sich eine Längenänderung der Transportgasse 7 ergibt.

Um eine entsprechende Formveränderung zu ermöglichen, ist das in der Fig. 5 dargestellte Transportgassenelement 17 zumindest im Bereich der Führungsschienen 19 aus einem flexiblen, insbesondere elastischen, Material gebildet. Die Führungsschienen 19 definieren hierbei eine Neckringführung, auf der der Kunststoffvorformling 1 über seinen Neckring 20 aufliegen kann. Um sicherzustellen, dass der hierfür relevante Abstand auch bei einer Formveränderung erhalten bleibt, ist in vertikaler Richtung oberhalb des Kunststoffvorformlings 1 bzw. oberhalb der Führungsschiene 19 eine Bügelanordnung aus zwei übereinander angeordneten Bügeln 21 vorgesehen, welche die Struktur des Transportgassenelementes 17 verstärkt.

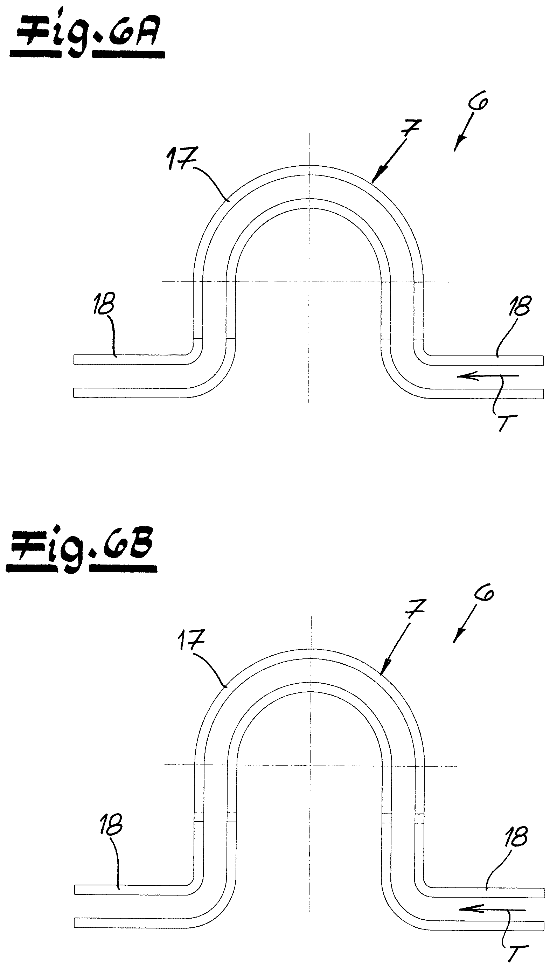

Die Fig. 6A, 6B zeigen eine alternative Ausgestaltung der Behältertransporteinrichtung 6, bei der ein separates Transportgassenelement 17 längsverschieblich beidseitig an gekrümmte feststehende Transportgassenabschnitte 18 anschließt. Es ergibt sich somit sowohl in dem in der Figur 6A gezeigten Betriebszustand als auch in dem in der Fig. 6B gezeigten Pufferzustand eine U-förmige Ausbildung des Transportgassenelementes 17, wobei die Verlängerung der Transportgasse 7 nach Art einer Posaune erfolgt.

### Bezugszeichenliste

- 1: Kunststoffvorformling
- 2: Sammelbehälter
- 3: Steigförderer
- 4: Sortiereinrichtung
- 5: Transportband
- 6: Behältertransporteinrichtung
- 7: Transportgasse
- 8: Haltevorrichtung
- 9: Halteelement
- 10: Einteilungsstern
- 11: Heizvorrichtung
- 12: Heizelemente
- 13: Teilungsverzugsstern
- 14: Blasvorrichtung
- 15: Antriebseinrichtung
- 16: Behälterdetektionseinrichtung
- 17: Transportgassenelement
- 18: Transportgassenabschnitt
- 19: Führungsschiene
- 20: Neckring
- 21: Bügel
- T: Transportpfades

## Patentansprüche

1. Behältertransporteinrichtung (6) zum Transport von Behältern und/oder Behälterelementen, insbesondere von Getränkebehältern, mit einer entlang eines Transportpfades (T) angeordneten Transportgasse (7), in welcher die Getränkebehälter lückenlos hintereinander transportierbar sind,
**dadurch gekennzeichnet, dass**
eine entlang des Transportpfades (T) verlaufende Länge der Transportgasse (7) in zumindest einem Transportgassenabschnitt einstellbar ausgebildet ist.

2. Behältertransporteinrichtung (6) nach Anspruch 1, **dadurch gekennzeichnet, dass** die Transportgasse (7) in dem zumindest einen Transportgassenabschnitt als separates Transportgassenelement (17) ausgebildet ist.

3. Behältertransporteinrichtung (6) nach Anspruch 2, **dadurch gekennzeichnet, dass** das Transportgassenelement (17) zumindest an einem angrenzenden feststehenden Transportgassenabschnitt (18) der Transportgasse (7) längsverschieblich gelagert ist.

4. Behältertransporteinrichtung (6) nach Anspruch 3, **dadurch gekennzeichnet, dass** das Transportgassenelement (17) an beiden angrenzenden feststehenden Transportabschnitten (18) der Transportgasse (7) längsverschieblich gelagert ist.

5. Behältertransporteinrichtung (6) nach einem der Ansprüche 2 bis 4, **dadurch gekennzeichnet, dass** das Transportgassenelement (17) einen formveränderbaren Transportgassenabschnitt bildet.

6. Behältertransporteinrichtung (6) nach einem der Ansprüche 2 bis 4, **dadurch gekennzeichnet, dass** das Transportgassenelement (17) dazu ausgebildet ist, zumindest in einer Pufferstellung einen U-förmigen Abschnitt des Transportpfades (T) der Transportgasse (7) zu bilden.

7. Behältertransporteinrichtung (6) nach einem der Ansprüche 2 bis 6, **dadurch gekennzeichnet, dass** das Transportgassenelement (17) sowohl in der Pufferstellung als auch in einer Betriebsstellung einen U-förmigen Abschnitt des Transportpfades (T) der Transportgasse (7) bildet, wobei das Transportgassenelement (17) beidseitig an gekrümmte Transportgassenabschnitte (18) der Transportgasse (7) anschließt.

8. Behältertransporteinrichtung (6) nach einem der vorangegangenen Ansprüche, **dadurch gekennzeichnet, dass** der Transportgasse (7), insbesondere dem Transportgassenelement (17), zur Verstellung der Länge eine Antriebseinrichtung (15) zugeordnet ist.

9. Behältertransporteinrichtung (6) nach einem der vorangegangenen Ansprüche, **dadurch gekennzeichnet, dass** ein Haltelement (9) in einem in Transportrichtung dem einstellbaren Transportgassenabschnitt nachgeordneten Endabschnitt der Transportgasse (7) angeordnet ist.

10. Behältertransporteinrichtung (6) nach einem der vorangegangenen Ansprüche, **dadurch gekennzeichnet, dass** der Transportgasse (7) eine Behälterdetektionseirichtung (16) zugeordnet ist.

11. Behältertransporteinrichtung (6) nach einem der vorangegangenen Ansprüche, **dadurch gekennzeichnet, dass** der Transportgasse (7) eine Sortiereinrichtung (4), insbesondere ein Rollensortier, vorgeschaltet ist.

12. Blasanlage, insbesondere Streckblasanlage, mit einer Blasvorrichtung (14) zum Ausformen von Getränkebehältern und einer der Blasvorrichtung (14) vorgeschalteten Behältertransporteinrichtung (6) nach einem der vorangegangenen Ansprüche.

13. Verfahren zum Betrieb einer Behältertransporteinrichtung (6) nach einem der Ansprüche 1 bis 11 und/oder einer Blasanlage nach Anspruch 12, wobei während eines Betriebs und/oder zur Einleitung des Betriebs die Transportgasse (7) verkürzt und die Behälter und/oder Behälterelemente entlang der Transportgasse (7) gefördert werden und/oder wobei während des Betriebs und/oder zur Einleitung eines Halts die Transportgasse (7) verlängert wird.

14. Verfahren nach Anspruch 13, wobei nach der Verlängerung der Transportgasse (7) der Transport der Behälter und/oder Behälterelemente unterbrochen wird.

15. Verfahren nach Anspruch 14, wobei zur Unterbrechung des Transports der Behälter und/oder Behälterelemente ein Haltelement (9) in eine Haltestellung innerhalb des Transportpfades (T) überführt wird.

16. Verfahren nach einem der Ansprüche 13 oder 14, wobei die Transportgasse (7) während des Betriebs und/oder zwischen dem Betrieb und dem Halt unterschiedlich ausgebildete Transportpfade (T) aufweist.

17. Verfahren nach einem der Ansprüche 13 bis 16, wobei die Behälter Kunststoffvorformlinge (1) sind.

18. Verfahren nach Anspruch 17, wobei die Behälter anschließend plastisch ausgeformt werden.
